# EUROPEAN PATENT APPLICATION

(11) **EP 4 624 135 A1**
(43) Date of publication of application: **01.10.2025**
(21) Application number: 24167591.7
(22) Date of filing: 28.03.2024
(51) Int. Cl.: B29C 64/147, B29C 64/264, B33Y 30/00, G02B 21/00, G02B 21/06, H04N 13/388, B29C 64/129, B29C 64/277

(54) **A LIGHT SHEET FORMING ARRANGEMENT**

(71) Applicant: xolo GmbH, 12489 Berlin (DE)
(72) Inventor: REUTER, Marcus, 12489 Berlin (DE); GARMSHAUSEN, Yves, 12489 Berlin (DE); RADZINSKI, Dirk, 12489 Berlin (DE); MARIN, Davide, 31044 Montebelluna (DE)
(74) Representative: Hafner & Kohl PartmbB

(57) **Abstract**

A light sheet forming arrangement.

## Description

### Field of invention

The invention relates to a light sheet forming arrangement, particularly for a volumetric 3d-printing device for volumetric 3d-printing to form a three-dimensional object, a light sheet microscopy device, or a volumetric display.

### Background Art

The formation of light sheets having defined properties, particularly defined geometrical and/or optical properties, is of significance for diverse technical applications including volumetric 3d-printing to form a three-dimensional object, light sheet microscopy, and volumetric displaying of information, for instance.

By now, respective light sheets are typically, formed by using light sources emitting non-divergent light which enables a relative reliable formation of light sheets by deflecting the light beams to form a (substantially) parallel arrangement of (collimated) light beams.

An exemplary principle of a light sheet formation in context with a volumetric 3d-printing method is disclosed in WO 2020/245456 A1, the contents of which can be incorporated herein by reference.

However, light sheet formation is challenging when one or more light sources emitting divergent light are used. In this case, the known principles of light sheet formation do not result in a light sheet having defined properties, particularly defined geometrical and/or optical properties.

As such, there is a need for an improved light sheet forming arrangement, particularly with respect to the formation of light sheets of defined properties from divergent light.

It is therefore, the object of the invention to overcome the drawbacks of known light sheet forming arrangements and to provide an improved light sheet forming arrangement.

### Summary of the invention

A first aspect of the invention relates to a light sheet forming arrangement, particularly for a device for volumetric 3d-printing (volumetric 3d-printing device) to form a three-dimensional object or for a light sheet microscopy device or for a volumetric display device. The light sheet forming arrangement thus, can be used in combination with a volumetric 3d-printing device or with a light sheet microscopy device or with a volumetric display device or can form part of a volumetric 3d-printing device or a light sheet microscopy device or a volumetric display device, for instance.

The light sheet forming arrangement, which can generally also be deemed a light sheet forming device, comprises at least the following components:
The light sheet forming arrangement comprises at least one first irradiation device. The at least one first irradiation device is configured to emit light of a first wavelength into a volume defined by at least one structural element of the light sheet forming arrangement. As such, the at least one first irradiation device can comprise at least one light source configured to emit light of a first wavelength.

The at least one first irradiation device can particularly, be configured to emit light having a wavelength in the range of: 350 nm - 500 nm, particularly 375 nm - 450 nm, more particularly 385 nm - 440 nm, more particularly 395 nm - 420, more particularly 400 nm - 410 nm, for instance. The first wavelength can thus, be a wavelength in the range of: 350 nm - 500 nm, particularly 375 nm - 450 nm, more particularly 385 nm - 440 nm, more particularly 395 nm - 420, more particularly 400 nm - 41 0 nm, for instance. The light of the first wavelength can comprise a spectrum of wavelengths, particularly at least partly covering the respective ranges. According to a specific example, the first wavelength can be a wavelength of 375 nm.

Particularly, the at least one first irradiation device can be configured to emit divergent light of the first wavelength into a volume defined by at least one structural element of the light sheet forming arrangement. As such, the at least one first irradiation device can particularly comprise at least one light source configured to emit divergent light of the first wavelength. An example of a respective light source is a light emitting diode, LED. The at least one first irradiation device can thus, comprise one or more light sources each being built as or comprising a light emitting diode.

Further, the light sheet arrangement comprises at least one respective structural element which is assigned to the at least one first irradiation device and which defines the volume into which the light is emittable or emitted from the at least one first irradiation device. The at least one structural element typically, comprises a structural element body. The structural element body can generally, have any shape. As an example, the structural element body can have a bar-, a cuboid-, a cylinder- or, as will be apparent from further below, a plate-shape. The respective volume defined by the at least one structural element can be a volume of the at least one structural element itself, i.e. particularly a volume of the structural element body, and/or a (free) volume at least partly delimited by the at least one structural element, i.e. particularly a (free) volume delimited by at least one freely exposed wall portion of the structural element body.

Notably, the at least one structural element is configured to generate at least one light sheet from the light of the first wavelength which has been emitted into the volume by the at least one first irradiation device. The at least one structural element thus, comprises properties, i.e. particularly optical properties, such as e.g. absorptive properties, reflective properties, light guiding properties, which enable generating at least one light sheet from the light of the first wavelength which has been emitted into the volume by the at least one first irradiation device. The at least one light sheet which can be generated by the at least one structural element has defined properties, i.e. particularly defined geometrical and/or optical properties. Typically, the at least one light sheet comprises multiple light beams traversing in one common light plane. Hence, the at least one light sheet can also be deemed a light projection formed by multiple light beams traversing in one common light plane. Therefore, the at least one structural element can also be deemed a light sheet forming element.

The light sheet forming arrangement thus, comprises a special structural configuration which facilitates that at least one light sheet having defined properties, i.e. particularly defined geometrical and/or optical properties, can be formed when light emitted from the at least one first irradiation device is emitted into a respective volume defined by the at least one structural element. Thereby, the properties, particularly the optical properties, of the at least one structural element facilitate the formation of at least one light sheet of defined properties. Specifically, the properties, particularly the optical properties, of the at least one structural element facilitate forming the light emitted from the at least one first irradiation device into the volume defined by the at least one structural element into at least one respective light sheet, wherein the light emitted from the at least one first irradiation device is or can be shaped, via the at least one structural element, under formation of at least one respective light sheet.

According to an exemplary embodiment, the at least one structural element can comprise at least one entry portion and at least one exit portion. As such, the at least one structural element itself, i.e. particularly the structural element body, can comprise an entry portion and an exit portion. The entry portion and the exit portion of the volume can have a rectangular cross-sectional shape, particularly a slit-like cross-sectional shape, for instance. The entry portion and the exit portion can be arranged at opposing ends, particularly at opposing lateral ends, of the at least one structural element, for instance. As such, the at least one structural element can comprise a light propagation path which extends between the entry portion and the exit portion. The light propagation path can particularly, facilitate linear light propagation of light emitted from the at least one first irradiation device through the at least one structural element in a specific direction which can result in the formation of a light sheet. In further exemplary embodiments, the entry portion and the exit portion can have different sizes, particularly different cross-sections, which can result in a respective tapered shape of the intermediate space.

Additionally or alternatively, the at least one structural element can define or delimit a (free) volume having at least one entry portion and at least one exit portion. In this case, at least one first wall portion of the at least one structural element can delimit an entry portion of the volume and at least one second wall portion of the at least one structural element can delimit an exit portion of the volume. The entry portion and the exit portion of the volume can have a rectangular cross-sectional shape, particularly a slit-like cross-sectional shape, for instance. The entry portion and the exit portion of the volume can be arranged at opposing ends, particularly at opposing lateral ends, of the volume, for instance. As such, the volume can comprise a light propagation path which extends between the entry portion and the exit portion. The light propagation path can particularly, facilitate linear light propagation of light emitted from the at least one first irradiation device through the volume in a specific direction which can result in the formation of a light sheet.

The at least one structural element can be configured such that it forms a light sheet from light, particularly from divergent light, entering the at least one structural element or the volume via the entry portion. Particularly, the at least one structural element can be configured to form a light sheet from light entering the at least one structural element or the volume via the entry portion. Hence, a light sheet can be formed through the fact that light enters the at least one structural element or the volume via the entry portion. The entry portion can therefore, have light sheet forming properties, e.g. because it acts as an optical aperture, which facilitate that light entering via the entry portion will be shaped, particularly due to optical interaction with the entry portion, so as to form a light sheet. Respective light sheet forming properties of the entry portion can result from geometrical and/or optical properties of the entry portion.

If multiple structural elements are provided, multiple light sheets can be formed, particularly in different orientations. As an example, at least one first structural element can form a first light sheet and at least one second structural element can form a second light sheet, wherein the first light sheet and the second light sheet intersect at an angle, particularly at an angle of 90°. Accordingly, the at least one first structural element can be arranged at an angle, particularly at an angle of 90°, relative to the at least one second structural element.

Additionally or alternatively, the at least one structural element can be configured such that it forms a light sheet from light, particularly divergent light, which light sheet exits the at least one structural element or the volume via the exit portion. Particularly, the at least one structural element can be configured to form a light sheet from light exiting the at least one structural element or the volume via the exit portion. Hence, a light sheet can be formed through the fact that light exits the at least one structural element or the volume via the exit portion. The exit portion can therefore, have light sheet forming properties, e.g. because it acts as an optical aperture, which facilitate that light exiting via the exit portion will be shaped, particularly due to optical interaction with the exit portion, so as to form a light sheet. Respective light sheet forming properties of the exit portion can result from geometrical and/or optical properties of the exit portion.

Particularly, the container is arranged (laterally) adjacent to the exit portion of the light sheet forming arrangement. Preferably, the container is arranged close to the exit portion of the light sheet forming arrangement through which the formed light sheet exits the light sheet forming arrangement. As an example, the distance between the exit portion and the container can range between 0 cm and 40 cm, particularly between 0,1 cm and 10 cm, more particularly between 0,1 cm and 5 cm, more particularly between 0,1 cm and 3 cm, more particularly between 0,1 cm and 2 cm, more particularly between 0,1 cm and 1 cm.

According to an exemplary embodiment, the at least one structural element can comprise at least one plate element. Hence, the at least one structural element can be or comprise at least one plate element configured to form the at least one light sheet. In this exemplary embodiment, the at least one structural element has a plate-like shape which comprises a main extension plane. As an example, a respective plate element can have a rectangular base-shape, a disc-like base-shape, or a polygonal base shape. The main extension plane is typically, arranged in parallel to the at least one extension plane of the at least one light sheet to be formed with the light sheet forming arrangement.

According to an exemplary embodiment, the at least one plate element can comprise at least one opening. The at least one opening can generally have any shape. As an example, the at least one opening can have a rectangular shape. The at least one opening can be defined or delimited by a plurality of wall portions of the at least one plate element. Particularly, the at least one opening can be defined or delimited by a plurality of wall portions of the at least one plate element extending in different spatial directions, such as e.g. horizontal and/or vertical directions. Respective wall portions of the at least one plate element which define or delimit the at least one opening can form respective inner entry portions and inner exit portions, respectively. As such, a respective plate element which comprises an opening delimited by at least a first and a second wall portion, particularly in an opposing arrangement, can form a first or outer entry portion via which light enters the light sheet forming arrangement at the first wall portion, a first or inner exit portion via which light exits the first wall portion so as to enter the at least one opening, a second or inner entry portion via which light, after propagation through the at least one opening, enters the second wall portion and a second or outer exit portion via which light exits the light sheet forming arrangement at the second wall portion.

In examples of the at least one plate element with a disc-like base shape, the at least one plate element can have the shape of a ring or a ring-disc, respectively. Particularly, multiple respective plate elements can be provided in a coaxial stacked arrangement. In such examples, the container typically has a cylindrical or hollow cylindrical shape such that it can be received within the inner space of the at least one ring- or a ring-disc-like shaped plate element. Notably, also the at least one first irradiation device can comprise a ring-shape at least partially, possibly completely, surrounding the outer circumference of the at least one ring- or a ring-disc-like shaped plate element. Particularly, respective light sources of the at least one first irradiation device can be arranged, e.g. in a ring-like arrangement, so as to surround the outer circumference of the plate elements which results in the formation of a light sheet of highly homogenous properties. The same applies for configurations in which the at least one plate element has a polygonal base-shape, such as e.g. a hexagonal or octagonal base-shape. In such embodiments, the light sources could be arranged in a corresponding polygonal arrangement, such as e.g. a hexagonal arrangement or an octagonal arrangement, to surround the outer circumference of the polygonal plate elements accordingly.

The distance between the first or outer entry portion and the first or outer exit portion can generally range between 0,1 mm and 100 cm, particularly between 1 cm and 100 cm. Notably, the distance between the first or outer entry portion and the first or outer exit portion can also be zero.

The distance between the first or outer entry portion and the assigned one or more light sources can generally also range between 0,1 mm and 100 cm, particularly between 1 cm and 100 cm. Notably, the distance between the first or outer entry portion and the assigned one or more light sources can also be zero.

Likewise, the distance between the first or outer exit portion and the assigned one or more light sources can generally also range between 0,1 mm and 100 cm, particularly between 1 cm and 100 cm. Notably, the distance between the first or outer exit portion and the assigned one or more sources can also be zero.

Particularly, when the distance between the first or outer entry portion and the first or outer exit portion is comparatively huge, the distance between the first or outer entry portion and the assigned one or more left light sources and/or the distance between the first or outer exit portion and the assigned one or more right light sources is comparatively small, and vice versa. As an example, when the distance between the first or outer entry portion and the first or outer exit portion is in a range between 1 mm and 10 cm, particularly between 1 mm and 1 cm, the distance between the first or outer entry portion and the assigned one or more left light sources and/or the distance between the first or outer exit portion and the assigned one or more right light sources can range between 50 cm and 100 cm, particularly between 60 cm and 100 cm, more particularly between 70 cm and 100 cm, more particularly between 80 cm and 100 cm, more particularly between 90 cm and 100 cm, and vice versa.

The at least one opening can be configured, i.e. particularly shaped and/or sized, to at least partly receive a container which defines a volume for receiving a specimen or a photopolymerizable material, particularly a photopolymerizable polymer resin, which is to be irradiated with light for forming a three-dimensional object. Additionally or alternatively, the at least one opening can be configured, i.e. particularly shaped and/or sized, to receive a substrate which defines a surface for receiving a specimen or a photopolymerizable material. Hence, the at least one plate element can be generally configured to at least partly receive at least one respective container and/or at least one respective substrate via the at least one opening. Particularly, the at least one opening can be shaped and/or sized such that at least one respective container and/or at least one respective substrate can pass through the at least one opening in a direction which is typically, transverse to the main extension plane of the at least one structural element or plate element, respectively. Particularly, the at least one structural element or plate element, respectively can be configured to form the at least one light sheet such that it extends through the at least one opening. More particularly, the at least one structural element or plate element, respectively can be configured to form the at least one light sheet such that the at least one light sheet is parallel to the main extension plane of the at least one structural element or plate element, respectively. Hence, the at least one structural element or plate element, respectively can be configured to form the at least one light sheet such that the at least one light sheet extends through the at least one opening in a direction which is transverse to the direction in which the at least one respective container and/or at least one respective substrate can pass through the at least one opening.

The at least one structural element and plate element, respectively can be made from a rigid material, for instance. Particularly, the at least one structural element and plate element, respectively can be made from at least one of: a ceramic, a composite, a metal, a plastic, for instance. Also, the at least one structural element and plate element, respectively can be made from a rigid material structure, particularly based on a ceramic, a polymer or a metal.

The at least one structural element and plate element, respectively can be made from or comprise a material or a material structure having light guiding properties. A respective material or material structure can be or comprise a plastic, such as e.g. polycarbonate, polymethylmethacrylate, etc., having light guiding properties or glass.

According to an exemplary embodiment, the light sheet forming arrangement can comprise at least a first and a second structural element, particularly in a parallel arrangement, more particularly such that their respective main extension planes are arranged in parallel. Particularly, the light sheet forming arrangement can comprise at least a first and a second plate element, particularly in a parallel arrangement, more particularly such that their respective main extension planes are arranged in parallel. Respective first and second plate elements can also be denoted front and back plate elements, respectively. Respective first and second structural elements and plate elements, respectively can have the same shape and/or size. Providing the light sheet forming arrangement with two or more structural elements or plate elements, respectively, particularly in a parallel arrangement, more particularly such that their respective main extension planes are arranged in parallel, can improve the light sheet forming capability of the light sheet forming arrangement because the light can be constrained from multiple sides resulting in the formation of at least one highly defined light sheet.

According to an exemplary embodiment, the at least one first and second structural elements can be arranged relative to each other such that an intermediate space, particularly a slit-like shape intermediate space, is defined between opposing faces of the at least one first and second structural elements. This particularly, applies to a parallel arrangement of the at least one first and second structural elements in which their respective main extension planes are arranged in parallel. The intermediate space can also be tapered. Providing the light sheet forming arrangement with two or more structural elements or plate elements, respectively arranged relative to each other such that an intermediate space, particularly a slit-like shape intermediate space, is defined between opposing faces of the at least one first and second structural elements, can further improve the light sheet forming capability of the light sheet forming arrangement because the light can pass through the light sheet forming arrangement only through the intermediate space resulting in the formation of at least one highly defined light sheet. As such, the intermediate space can have an entry portion, which can be provided at a first lateral side of the light sheet forming arrangement, and an exit portion, which can be provided at an opposing second lateral side of the light sheet forming arrangement, such that a respective light propagation path is defined by the intermediate space. The intermediate space can therefore, also be deemed a light sheet forming space which is delimited by opposing faces of the first and second structural elements.

According to an exemplary embodiment, the intermediate space has a width of less than 1 mm, particularly less than 0,5 mm, more particularly less than 0,1 mm. The width of the intermediate space is particularly, defined by the distance between the opposing faces of the first and second structural elements. The width of the intermediate space can be adjusted by changing the relative arrangement of the first and second structural elements. Adjusting the width of the intermediate space can be effected by adjusting elements which enable a change of the position of at least one structural element to another structural element. As such, at least one structural element can be moveable relative to another structural element so as to change the width of the intermediate space. Respective adjusting elements can thus, comprise one or more supporting elements which facilitate that at least one structural element can be moveable relative to another structural element in at least one degree of freedom of movement which can be a translational and/or a rotational degree of freedom of movement. Hence, also the shape of the intermediate space can be adjusted, e.g. by rotating or pivoting one structural element relative to another structural element, thereby changing the dimensions of a respective entry portion and/or exit portion, for instance. Adjusting the width or shape of the intermediate space can be a means to adjust the properties of the resulting light sheets. Typically, smaller intermediate spaces result in sharper light sheets.

In light of the above, a concrete exemplary embodiment of the light sheet forming arrangement can comprise that first and second structural elements are provided, wherein the first and second structural elements are plate elements each comprising at least one opening for at least partly receiving a respective container and/or a respective substrate, wherein the first plate element and the second plate element are arranged in parallel such that their respective openings are arranged along a common axis, particularly such that their respective openings define a channel-like receiving space for receiving a respective container and/or a respective substrate.

Hence, if respective first and second structural elements and plate elements, respectively are provided with respective openings, the at least one opening of a first structural element and plate element, respectively can generally be arranged relative to the at least one opening of a second structural element and plate element, respectively such that the respective openings are aligned and build a channel-like receiving space (receiving channel) extending through the light sheet forming arrangement in a direction transverse to the main extension planes of the respective structural elements and plate elements, respectively.

According to an exemplary embodiment, the first and second structural elements can be attached to each other. The first and second structural elements can thus, comprise one or more attachment interfaces which facilitate that the first and second structural elements can be attached to each other. Respective attachment interfaces can comprise attachment elements which can directly interact with each other such that at least one first attachment interface of a first structural element can directly interact with at least one second attachment interface of a second structural element or vice versa. Examples of respective first and second attachment interfaces are positive-locking elements, such as projections, receptables, etc. which facilitate a positive-locking between the first and second structural elements. Alternatively, respective attachment interfaces can comprise attachment elements which can indirectly interact with each other via at least one attachment member such that at least one first attachment interface of a first structural element can indirectly interact with at least one second attachment interface of a second structural element or vice versa via a respective attachment member. Examples of respective first and second attachment interfaces are bores, openings, etc. which can be penetrated by an attachment bolt which is an example of an attachment member. The aforementioned principles also apply to non-mechanical attachments principles of structural elements, such as adhesive attachment principles, hydraulic attachment principles, magnetic attachment principles, for instance. An attachment of the first and second structural elements can thus, comprise an adhesive attachment, e.g. by gluing, a mechanical attachment, a hydraulic attachment, a magnetic attachment, etc. It is apparent that the attachment of the first and second structural elements can be detachable which can ease installation, service, and repair, for instance.

According to an exemplary embodiment, the first and second structural elements can be moveably supported relative to each other. As indicated above, a movement of the structural elements relative to each other can be particularly, useful for adjusting the intermediate space between the structural elements. The light sheet forming arrangement can comprise one or more guiding elements which facilitate a guided motion of at least one structural element relative to another structural element. Respective guiding elements can define translatory and/or rotary motion paths along and/or about which respective structural elements can be moved relative to each other. Respective guiding elements can comprise one or more rails, slides, etc. Further, the light sheet forming arrangement can comprise one or more drive devices configured to generate a force to move at least one structural element relative to another structural element. A respective drive device can comprise a motor, particularly a stepper motor, for instance.

According to another exemplary embodiment, the light sheet forming arrangement can comprise at least one spacer element arranged between respective first and second structural elements, wherein the at least one spacer element comprises a first face facing and contacting a face of the first structural element and a second face facing and contacting a face of the second structural element. Providing one or more respective spacer elements can assure a geometrically defined spatial arrangement of the first and second structural elements and a geometrically defined geometric intermediate space, respectively which improves the light sheet forming quality of the light sheet forming arrangement. A respective spacer element can generally, have any shape. As an example, a respective spacer element can have a bar-,a film-, or a plate-shape. The wall thickness of a respective spacer element can correspond to the above-mentioned width of the intermediate space. The wall thickness of a respective spacer element can thus, be less than 1 mm, particularly less than 0,5 mm, more particularly less than 0,1 mm, for instance.

Particularly, multiple respective spacer elements can be provided. In an exemplary configuration of the light sheet forming arrangement with multiple spacer elements, a first spacer element can be arranged above at least one opening in at least one first structural element or first plate element, respectively and at least one second spacer element can be arranged below at least one opening in the at least one first structural element or plate element, respectively. Additionally or alternatively, a lateral arrangement of respective spacer elements is conceivable.

According to an exemplary embodiment, the at least one spacer element can be made of a transmissive material, e.g. a transmissive polymer or a transmissive glass, or a transmissive material structure such that light of the first wavelength can be transmitted through the at least one spacer element. As such, respective spacer elements do not compromise the light sheet forming properties of the light sheet forming arrangement e.g. due to undesired optical interactions between the light extending through the respective intermediate space and the respective spacer element(s). Particularly, the transmissive material or the transmissive material structure can be a light guiding material or a light guiding material structure with respect to light of the first wavelength. Hence, the transmissive material or the transmissive material structure can even support propagation of light through the intermediate space.

According to an exemplary embodiment, the at least one structural element can at least partially comprise reflective properties with respect to the light of the first wavelength as emitted from the at least one first irradiation device. Particularly, the at least one structural element can comprise a face which at least partially comprises reflective properties with respect to light of the first wavelength as emitted from the at least one first irradiation device. Hence, the at least one structural element can be provided with optically reflective properties which support the formation of a defined light sheet, e.g. due to reflective effects which enable forming a (substantially) parallel arrangement of light beams in one common light plane. Particularly, the reflective properties of the at least one structural element can be provided at wall portions of the at least one structural element which define or delimit the respective volume. In configurations of the light sheet forming arrangement with at least two structural elements and an intermediate space therein between, at least one structural element, preferably two structural elements, can be provided with reflective properties at wall portions facing the intermediate space. In either case, respective reflective properties can be provided by a coating, e.g. a plastic or metallic coating, having reflective properties with respect to the first wavelength as emitted from the at least one first irradiation device, for instance.

According to an exemplary embodiment, the at least one structural element can at least partially comprise absorptive properties with respect to the light of the first wavelength as emitted from the at least one first irradiation device. Particularly, the at least one structural element can comprise a face which at least partially comprises absorptive properties with respect to light of the first wavelength as emitted from the at least one first irradiation device. Hence, the at least one structural element can be provided with optically absorptive properties which support the formation of a defined light sheet, e.g. due to absorptive effects which enable forming a (substantially) parallel arrangement of light beams in one common light plane. Particularly, the absorptive properties of the at least one structural element can be provided at wall portions of the at least one structural element which define or delimit the respective volume. In configurations of the light sheet forming arrangement with at least two structural elements and an intermediate space therein between, at least one structural element, preferably two structural elements, can be provided with absorptive properties at wall portions facing the intermediate space. In either case, respective absorptive properties can be provided by a coating, e.g. a plastic or metallic coating, having absorptive properties with respect to the first wavelength as emitted from the at least one first irradiation device, for instance.

According to an exemplary embodiment, the at least one structural element can comprise an aperture device comprising at least one, particularly slit-like, aperture opening. The aperture device can have a plate-like shape which comprise the at least one, particularly slit-like, aperture opening. The main extension plane of the aperture device can be arranged angled, particularly perpendicular, relative to the extension plane of the at least one light sheet to be formed with the light sheet forming arrangement.

According to an exemplary embodiment, one or more optical elements, such as e.g. beam expanding elements, e.g. beam expanding lenses, collimating elements, e.g. collimating lenses, can be arranged between the at least one first irradiation device and the at least one structural element. Concrete examples of respective optical elements comprise lenses, e.g. double-concave lenses, planoconcave lenses, double-convex lenses, planoconvex lenses, etc. Particularly, respective one or more optical elements can be configured to collimate divergent light emitted from the at least one first irradiation device. The provision of respective optical elements between the at least one first irradiation device and the at least one structural element can improve the quality of the at least one light sheet to be formed with the light sheet forming arrangement.

According to an exemplary embodiment, the at least one first irradiation device can comprise one or more light sources provided at different positions relative to the at least one structural element. Particularly, one or more light sources can be provided at one or more lateral sides of the at least one structural element and plate element, respectively. More particularly, one or more first light sources can be arranged at a first lateral side of the at least one structural element and plate element, respectively and one or more second light sources can be arranged at an opposing second lateral side of the at least one structural element and plate element, respectively. Hence, light can enter the volume from one side or form two sides, particularly two opposing sides, which typically, results in forming more homogeneous light sheets.

If one or more first and/or second light sources are provided, respective first and/or second light sources can be arranged in at least one column and/or row which can result in a matrix-like arrangement of respective light sources. As indicated further above, respective light sources can be or comprise light emitting diodes. Hence, according to a concrete embodiment, the at least one first irradiation device can comprise one or more first light emitting diodes, e.g. in a respective matrix-like arrangement, arranged at a first lateral side of the volume and/or one or more second light emitting diodes, e.g. in a respective matrix-like arrangement, arranged at an opposing second lateral side of the volume.

According to an exemplary embodiment, the at least one first irradiation device can comprise at least one light emitting element, particularly at least one light emitting diode, and at least one optical lens element, particularly a collimating lens element, assigned to the at least one light emitting element, particularly the at least one light emitting diode. Hence, the optical properties of the light emittable or emitted from the at least one first irradiation device can be improved by assigning a respective optical lens element, particularly a collimating lens element, to the respective light emitting elements such that the light emitttable or emitted from the light emitting elements passes through the respectively assigned optical lens element before it enters the volume or propagates through the volume, respectively. Concrete exemplary embodiments of respective optical lens elements can comprise so-called optical micro-lens elements.

As indicated above, the light sheet forming arrangement can be assigned to or form part of a volumetric 3d-printing device configured to form a three-dimensional object. Hence, a second aspect of the invention relates to a device for volumetric 3d-printing to form a three-dimensional object.

The volumetric 3d-printing device typically, comprises a container defining a volume configured to receive a photopolymerizable material, particularly a photopolymerizable polymer resin, which is to be irradiated with light for forming a three-dimensional object; and a light sheet forming arrangement according to the first aspect of the invention. All annotations regarding the light sheet forming arrangement apply to the volumetric 3d-printing device and vice versa.

The volumetric 3d-printing device is generally configured to form a three-dimensional object via volumetric 3d-printing. A respective three-dimensional object can be a technical component or a technical component assembly, for instance. A respective volumetric 3d-printing process can comprise at least one local polymerization process of a polymerizable material, particularly a photopolymerizable material, for the continuous additive manufacture of at least one three-dimensional object, particularly multiple three-dimensional objects, by means of multiphoton photopolymerization, particularly multi-color photopolymerization, more particularly dual-color photopolymerization. The volumetric 3d-printing device can thus be configured to perform one or more local polymerization processes of a polymerizable material, e.g., a photopolymerizable monomer resin, which polymerizable material may include but is not limited to acrylates, methacrylates, thiol + ene, epoxides, oxiranes, oxetanes, or vinylethers, and/or a photopolymerizable oligomer resin, which may include but are not limited to acrylates, methacrylates, thiol + ene, epoxides, oxiranes, oxetanes, or vinylethers, for the continuous additive manufacture of at least one three-dimensional object by means of multiphoton photopolymerization, particularly multi-color photopolymerization, more particularly dual-color photopolymerization. As such, the volumetric 3d-printing device can be configured to continuously additively manufacture at least one three-dimensional object by means of multiphoton photopolymerization, particularly multi-color photopolymerization, more particularly dual-color photopolymerization, of a photopolymerizable material, particularly a photopolymerizable polymer, e.g., a photopolymerizable polymer resin.

Respective local polymerization processes which can be carried out with the volumetric 3d-printing device, typically, comprise irradiating a photoinitiator with light of at least one wavelength to convert the molecules of the photoinitiator via sequential optical excitation into a reactive state in which the molecules of the photoinitiator locally trigger a polymerization reaction of a polymerizable material in a working volume of the volumetric 3d-printing device. Photopolymerization of the polymerizable material is thus typically, effected inside a working volume of the volumetric 3d-printing device, e.g. by irradiating light of at least one first wavelength and light of at least one further wavelength, which further wavelength is different from the first wavelength, via one or more irradiation devices of the volumetric 3d-printing device into the working volume, which results in that the molecules of the photoinitiator are converted, e.g., due to the absorption of light of the first wavelength, from an initial state in which the molecules of the photoinitiator (substantially) do not absorb the light of the second or further wavelength, into an intermediate state with changed optical properties compared to the initial state, such that the molecules of the photoinitiator in the intermediate state absorb the light of the further wavelength which results in that the molecules of the photoinitiator are transferred from the intermediate state to the reactive state which locally triggers the polymerization of the photopolymerizable material to manufacture at least one three-dimensional object inside the working volume of the volumetric 3d-printing device. A back reaction from the intermediate state into the initial state can be thermally induced, for instance.

The volumetric 3d-printing device can thus generally be embodied as a xolography device, i. e. a device configured to perform the base principles of xolography. The base principles of xolography are specified in WO 2020/245456 A1, the contents of which are incorporated herein by reference.

As indicated above, the volumetric 3d-printing device comprises a working volume configured to receive a photopolymerizable material, particularly a photopolymerizable polymer resin, which is to be irradiated with light of at least one wavelength, particularly with light of at least two different wavelengths, for forming a three-dimensional object. The working volume of the volumetric 3d-printing device can be a local sub-volume of a container volume of a container of the volumetric 3d-printing device. The container can be moveably supported relative to the at least one structural element and plate element, respectively, particularly in a direction transverse to the main extension plane of the at least one structural element and plate element, respectively as indicated further above. Additionally or alternatively, the at least one light sheet can be moved relative to the container (which can then be fixed or in a fixed position, respectively).

The volumetric 3d-printing device thus, comprises a container which comprises a container volume. As mentioned above, the container volume can comprise a local sub-volume which can represent the working volume of the volumetric 3d-printing device. The container volume can be delimited by one or more container walls of the container. The one or more container walls can be transparent with respect to light of a first wavelength and/or light of a further wavelength (as specified above). Respective transparent container walls can be provided as walls of glass, or walls of translucent polymers, such as PC (polycarbonate), PMMA (polymethylmethacrylate), or COC (cyclic olefin copolymer), for instance. At least some of the container walls can, at least to some degree, exhibit diffractive and/or refractive effects to incident light of at least the first wavelength, as will be apparent from further below.

As indicated above, the photopolymerizable material can comprise photoinitiator molecules that can be converted, particularly via an intermediate state, into a reactive state by means of radiation with light of at least one wavelength, wherein the photoinitiator molecules initiate local polymerization of the polymerizable material into the reactive state. As a non-limiting example, respective photoinitiator molecules can comprise spiropyran molecules, i. e. molecules of the spiropyran/merocyanine system in which the spiropyran form is the thermodynamically preferred form and undergoes a ring-opening reaction upon irradiation with light of a first wavelength which results in that the spiropyran form is transferred in the metastable merocyanine form which can be transferred, particularly by absorption of light of a further wavelength, into the reactive state.

As indicated further above, the volumetric 3d-printing device comprises at least one first irradiation device comprising at least one light source configured to irradiate light of a first wavelength into the working volume to generate at least one first light projection in the working volume. Notably, the at least one first irradiation device can be the at least one first irradiation device of the light sheet forming arrangement. The at least one first light projection can thus, comprise multiple light beams traversing the working volume in at least one light sheet formed by the light sheet forming arrangement. The at least one first irradiation device can further comprise at least one optical element which can e.g. comprise at least one of: a Powell-lens, a cylindrical lens, a diffractive optical element, a beam expanding element, a collimating optical element, etc. Additionally or alternatively, the at least one first irradiation device can comprise a light deflection unit, such as e.g. a galvo-scanner, or a polygon scanner, for deflecting light into the volume defined by the at least one structural element of the light sheet forming arrangement. As indicated above, the light as emitted or irradiated by the at least one first irradiation device can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of the photoinitiator.

The volumetric 3d-printing device can additionally comprise at least one further irradiation device configured to continuously project a plurality of images of light of a further wavelength, the further wavelength being different from the first wavelength, into the working volume. Each image of the further wavelength can correspond to a specific portion, particularly a specific cross-section, of the at least one three-dimensional object to be manufactured with the volumetric 3d-printing device. The at least one further irradiation device can thus be built as or comprise an image projector. The light as emitted or irradiated by the at least one further irradiation device can comprise a wavelength in the range of: 400 nm - 1000 nm, particularly 425 - 750 nm, more particularly 450 - 675 nm, more particularly 500 - 650 nm, for instance. The light of the further wavelength can comprise a spectrum of wavelengths, particularly at least partly covering the respective ranges. Typically, the further wavelength will be chosen at least under consideration of the photochemical properties, particularly the photochromic properties, of molecules of the photoinitiator.

In exemplary embodiments in which the volumetric 3d-printing device additionally comprises at least one further irradiation device configured to continuously project a plurality of images, the at least one further irradiation device can be configured to irradiate the light of the further wavelength into the working volume to generate a second light projection in the working volume, the second light projection intersecting the first light projection, which his formed by the light sheet of the light of the first wavelength, at a specific angle, particularly an angle of 90°. Hence, the at least one light plane generated by the light sheet forming arrangement can be oriented at an angle, particularly at an angle of 90°, relative to the direction of projection of the plurality of images generated by the at least one further irradiation device. In such embodiments, the local polymerization process of the photopolymerizable material and, thus the formation of a three-dimensional object can occur in the region in which the projected images generated by the at least one further irradiation device intersect the at least one light sheet generated by the light sheet forming arrangement (and vice versa). As indicated above, the local polymerization process of the photopolymerizable material and, thus the formation of a three-dimensional object can take place continuously (which is one characteristic of volumetric 3d-printing relative to conventional additive manufacturing principles).

Typically, the projection of the plurality of images generated by the at least one further irradiation device does not only overlay the light sheet generated by the light sheet forming arrangement but also has its focus plane in the light sheet. Notably, dynamic or static optical properties of the photopolymerizable material, such as the refractive index, can be considered for adjusting the focus plane of the projection of the plurality of images generated by the at least one further irradiation device.

In further exemplary embodiments, the volumetric 3d-printing device can comprise at least one beam splitting unit assigned to at least one light source of the at least one first irradiation device. The at least one beam splitting unit can be configured to split the light generated by the at least one first irradiation device into multiple split light beams, wherein one or more split light beams can be used for generating the at least one light sheet. Additionally or alternatively, one or more split light beams can be used for projecting respective images into the working volume, wherein each image can correspond to a specific portion, particularly a specific cross-section, of the at least one three-dimensional object to be manufactured with the volumetric 3d-printing device. As such, the volumetric 3d-printing device can be operated with a single light source and respective light beams for generating the light sheet can be generated from at least one light beam split off from an original light beam as emitted from the at least one first irradiation device via the at least one beam splitting unit, and respective light beams for projecting images can be generated from at least one respective light beam split off from the original light beam as emitted from the at least one light source via the at least one beam splitting unit. The at least one beam splitting unit can be built as or comprise a beam splitting prism, for instance, which is arranged in the optical path downstream of the at least one light source.

As indicated above, respective openings of the at least one structural element can also be configured to receive a substrate which defines a surface for receiving a specimen or a photopolymerizable material.

A third aspect of the invention relates to a light sheet microscopy device, which comprises at least a volume, particularly a volume defined by substrate, which comprises a surface for receiving a specimen, and a light sheet forming arrangement according to the first aspect of the invention. The light sheet microscopy device can comprise further constructive and/or functional devices typically, forming part of a light sheet microscopy display device. All annotations regarding the light sheet forming arrangement apply to the light sheet microscopy device and vice versa.

A fourth aspect of the invention relates to a volumetric display device, which comprises at least a light sheet forming arrangement according to the first aspect of the invention. The volumetric display device can comprise further constructive and/or functional devices typically, forming part of a volumetric display device. All annotations regarding the light sheet forming arrangement also apply to the volumetric display device and vice versa.

### Brief description of the drawings

With these and other advantages and features that will become hereinafter apparent, a more complete understanding of the invention can be obtained by referring to the following description of the appended drawings in which:
Fig. 1 - 4 each show a principle drawing of a light sheet forming arrangement according to a first exemplary embodiment; and
Fig. 5-8 each show a principle drawing of a light sheet forming arrangement according to a further exemplary embodiment.

### Detailed description of the drawings

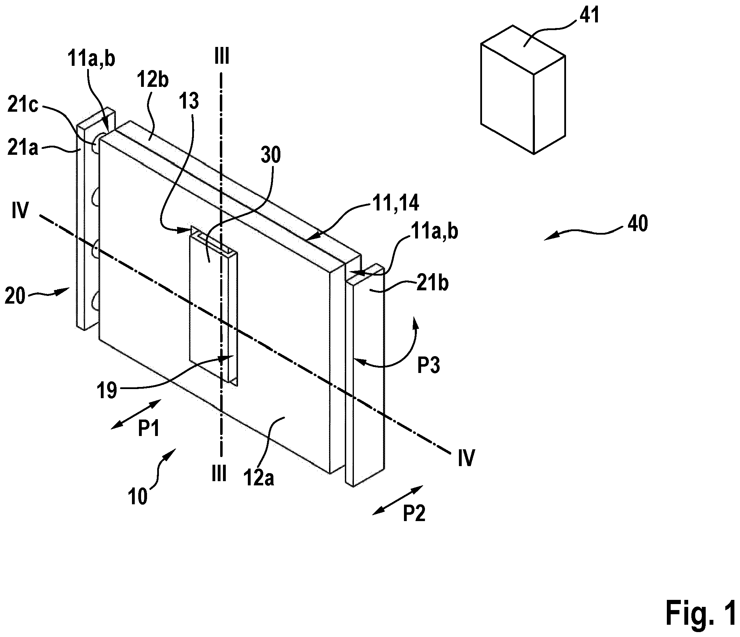

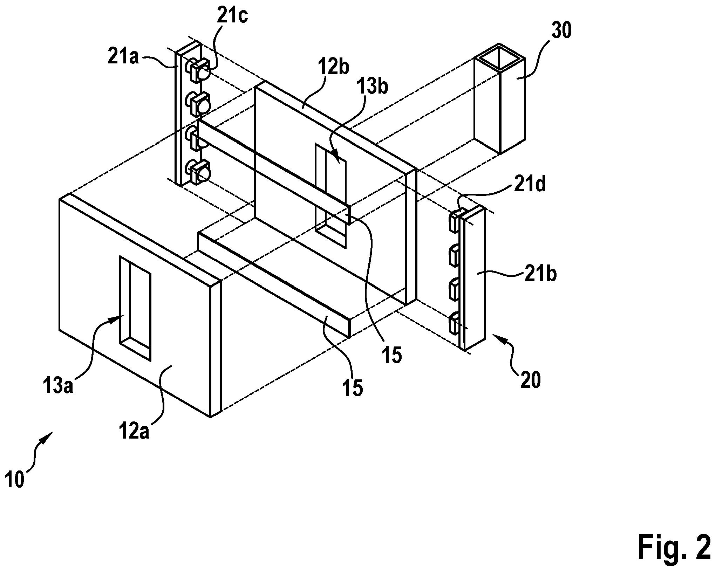

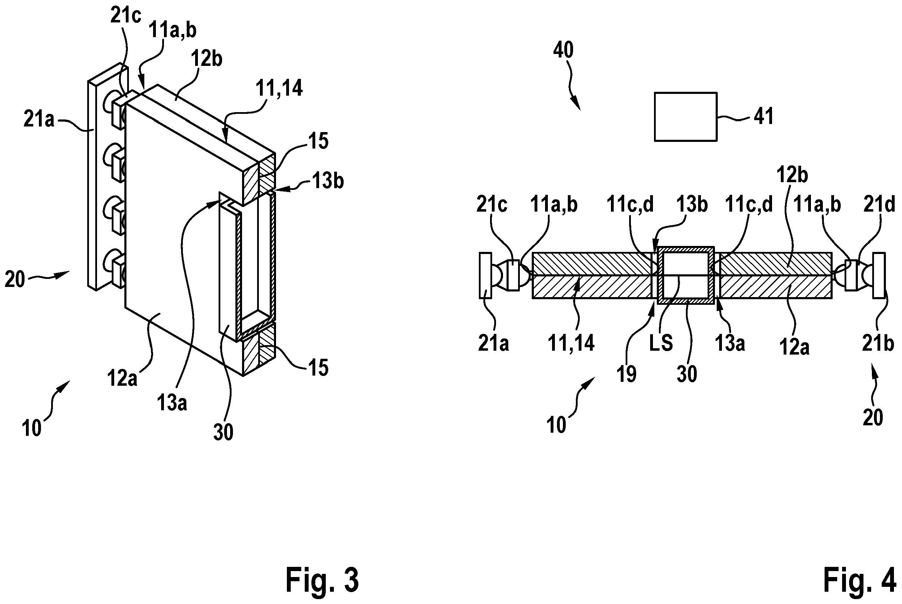

Fig. 1 - 4 each show a principle drawing of a light sheet forming arrangement 10 according to a first exemplary embodiment. More specifically, Fig. 1 shows the light sheet forming arrangement 10 in a perspective view, Fig. 2 shows the light sheet forming arrangement 10 in an exploded view, Fig. 3 show the light sheet forming arrangement 10 in a vertically cut view along cutting lines III - III of Fig. 1, and Fig. 4 shows the light sheet forming arrangement 10 in horizontally cut view along cutting lines IV - IV of Fig. 1.

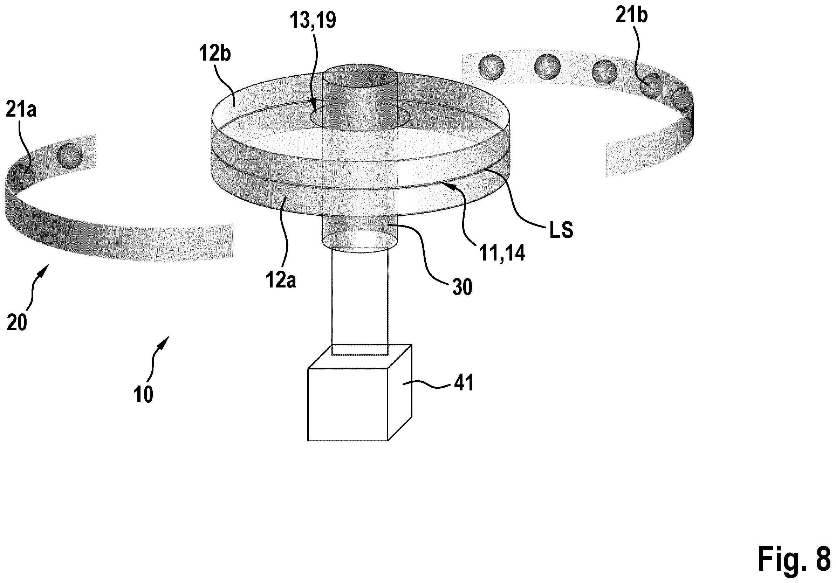

In the exemplary embodiments of the Fig., the light sheet forming arrangement 10 is configured for being used in connection with a device for volumetric 3d-printing (volumetric 3d-printing device) to form a three-dimensional object. However, other uses of the light sheet forming arrangement 10, e.g. in connection with a light sheet microscopy device or for a volumetric display device are contemplated. A respective light sheet is exemplarily shown in Fig. 4 and 8, where it is indicated by the expression "LS".

The light sheet forming arrangement 10, which can generally also be deemed a light sheet forming device, comprises at least the following components:
The light sheet forming arrangement 10 comprises a first irradiation device 20. The first irradiation device 20 is configured to emit light of a first wavelength into a volume 11 which volume 11 is defined by two structural elements 12a, 12b of the light sheet forming arrangement 10. In the exemplary embodiments of the Fig., the first irradiation device 20 comprises multiple light sources 21a, 21b each configured to emit light of the first wavelength. Respective light sources 21a, 21b can be arranged on carrier structures, for instance.

As is apparent from Fig. 1, a first group of light sources 21a of the multiple light sources 21a, 21b is arranged at a first lateral side of the light sheet forming arrangement 10 and a second group of light sources 21b of the multiple light sources 21a, 21b is arranged at an opposing second lateral side of the light sheet forming arrangement 10. As such, the first irradiation device 20 can comprise one or more light sources 21a, 21b provided at one or more lateral sides of the light sheet forming arrangement 10. Particularly, one or more first light sources 21a can be arranged at a first lateral side of the light sheet forming arrangement 10 and one or more second light sources 21b can be arranged at an opposing second lateral side of the light sheet forming arrangement 10. Hence, light can enter the volume 11 from two sides, particularly two opposing sides, which typically, results in forming more homogeneous light sheets.

Notably, the light sources 21a, 21b can be arranged in at least one column and/or row which can result in a matrix-like arrangement of respective light sources 21a, 21b.

In the exemplary embodiment of Fig. 1 - 4, the first irradiation device 20 comprises, as respective light sources 21a, 21b, light emitting diodes and optical lens elements 21c, 21d, particularly collimating lens elements, assigned thereto (which is an optional feature). Hence, the optical properties of the light emittable or emitted from the light sources 21a, 21b can be improved by assigning respective optical lens elements 21c, 21d, particularly collimating lens elements, thereto such that the light emitttable or emitted from the light sources 21a, 21b passes through the respectively assigned optical lens elements 21c, 21d before it enters the volume 11 or propagates through the volume 11, respectively. Concrete exemplary embodiments of respective optical lens elements 21c, 21d can comprise so-called optical micro-lens elements.

The first irradiation device 20 and the respective light sources 21a, 21b can be configured to emit light having a wavelength in the range of: 350 nm - 500 nm, particularly 375 nm - 450 nm, more particularly 385 nm - 440 nm, more particularly 395 nm - 420, more particularly 400 nm - 410 nm, for instance. The first wavelength can thus, be a wavelength in the range of: 350 nm - 500 nm, particularly 375 nm - 450 nm, more particularly 385 nm - 440 nm, more particularly 395 nm - 420, more particularly 400 nm - 410 nm, for instance. According to a specific example, the first wavelength can be a wavelength of 375 nm.

Particularly, the first irradiation device 20 can be configured to emit divergent light of the first wavelength. As such, the light sources 21a, 21 of the first irradiation device 20 can be configured to emit divergent light of the first wavelength. The light sources 21a, 21b can therefore, be or comprise light emitting diodes, LED. The first irradiation device 20 can thus, comprise multiple light sources 21a, 21b each being built as or comprising a light emitting diode.

Further, the light sheet arrangement 10 of the first exemplary embodiment comprises two structural elements 12a, 12b which are assigned to first irradiation device 20 and which define the volume 11 into which the light is emittable or emitted from the first irradiation device 20. Each of the structural elements 12a, 12b comprises a structural element body which can have a plate-like shape. The structural elements 12a, 12b can thus, be deemed plate elements.

Notably, the structural elements 12a, 12b and their spatial arrangement relative to each other, respectively facilitates generating a light sheet from the light of the first wavelength which has been emitted into the volume 11 by the first irradiation device 20. The structural elements 12a, 12b and their spatial arrangement relative to each other, respectively thus, results in properties of the light sheet forming arrangement 10, i.e. particularly optical properties, such as e.g. absorptive properties, reflective properties, light guiding properties, which enable generating a light sheet having defined properties, i.e. particularly defined geometrical and/or optical properties, from the light of the first wavelength which has been emitted into the volume 11 by the first irradiation device 20. Therefore, the structural elements 12a, 12b can also be deemed light sheet forming elements.

The light sheet forming arrangement 10 thus, comprises a special structural configuration which facilitates that a light sheet having defined properties, i.e. particularly defined geometrical and/or optical properties, can be formed when light emitted from the first irradiation device 20 is emitted into the volume 11 defined by the structural elements 12a, 12b. Thereby, the arrangement and/or the properties, particularly the optical properties, of the structural elements 12a, 12b facilitate the formation of a light sheet of defined properties. Specifically, the arrangement and/or the properties, particularly the optical properties, of the structural elements 12a, 12b facilitate forming the light emitted from the first irradiation device 20 into the volume 11 defined by the structural elements 12a, 12b into a respective light sheet, wherein the light emitted from the first irradiation device 20 is or can be shaped, via the structural elements 12a, 12b, particularly via the arrangement of the structural elements 12a, 12b, under formation of a respective light sheet.

The structural elements 12a, 12b define or delimit a (free) volume 11 having at least one entry portion 13 and at least one exit portion 14. Particularly, a first wall portion, e.g. a first lateral outer portion, of the structural elements 12a, 12b can delimit an entry portion of the volume 11 and a second wall portion, e.g. an opposing second lateral outer portion, of the structural elements 12a, 12b can delimit an exit portion of the volume 11.

In the exemplary embodiment of Fig. 1 - 4, the left lateral outer portions of the structural elements 12a, 12b delimit an entry portion 11a of the volume 11 for the light entering from the left group of light sources 21a and accordingly, the right lateral outer portions of the structural elements 12a, 12b delimit an exit portion 11b of the volume 11 for the light entering from the left group of light sources 21a. Likewise, the right lateral outer portions of the structural elements 12a, 12b delimit an entry portion 11a of the volume 11 for the light entering from the right group of light sources 21b and accordingly, the left lateral outer portions of the structural elements 12a, 12b delimit an exit portion 11b of the volume 11 for the light entering from the right group of light sources 21b.

Fig. 4 shows that the respective entry portions 11a and exit portions 11b of the volume 11 can thus, be arranged at opposing ends, particularly at opposing lateral ends, of the volume 11 (see Fig. 4). Fig. 4 further indicates that the respective entry portions 11a and exit portions 11b of the volume 11 can have a rectangular, particularly a slit-like, cross-sectional shape, for instance. As such, the volume 11 can comprise a light propagation path which extends through the volume 11 between the entry portions 11a and the exit portions 11b. The light propagation path can particularly, facilitate linear light propagation of light emitted from the respective light sources 21a, 21b through the volume 11 in a specific direction which can result in the formation of a light sheet.

The entry portions 11a can therefore, have light sheet forming properties which facilitate that light entering the volume 11 via the entry portions 11a will be shaped, particularly due to optical interaction with the entry portions 11a which can act as an optical aperture, so as to form a light sheet. Respective light sheet forming properties of the entry portions 11a can result from geometrical and/or optical properties of the entry portions 11a.

Additionally or alternatively, a light sheet can be formed through the fact that light exits the at least one structural element or the volume via the exit portions 11b. The exit portions 11b can therefore, have light sheet forming properties which facilitate that light exiting the volume 11 via the exit portions 11b will be shaped, particularly due to optical interaction with the exit portions 11b which can act as an optical aperture, so as to form a light sheet. Respective light sheet forming properties of the exit portions 11b can result from geometrical and/or optical properties of the exit portions 11b.

As is apparent from Fig. 1, the structural elements 12a, 12b each comprise an opening 13a, 13b. The respective openings 13a, 13b can have a rectangular shape as is shown in the exemplary embodiment. The openings 13a, 13b are defined or delimited by a plurality of wall portions of the respective structural elements 12a, 12b. Particularly, the openings 13a, 13b are defined or delimited by a plurality of wall portions of the respective structural elements 12a, 12b extending in different spatial directions, such as e.g. horizontal and/or vertical directions. Respective wall portions of the respective structural elements 12a, 12b which define or delimit the opening 13a, 13b can form respective inner entry portions 11c and inner exit portions 11d. As such, respective structural elements 12a, 12b which comprise an opening 13a, 13b delimited by a respective first and second wall portion in an opposing arrangement can form a first or outer entry portion 11a via which light enters the light sheet forming arrangement 10 at the first wall portion, a first or inner exit portion 11d via which light exits the first wall portion so as to enter the respective opening 13a, 13b, a second or inner entry portion 11c via which light, after propagation through the respective opening 13a, 13b, enters the second wall portion and a second or outer exit portion 11b via which light exits light sheet forming arrangement 10 at the second wall portion.

The distance between the first or outer entry portion 11a and the first or outer exit portion 11b can generally range between 0,1 mm and 100 cm, particularly between 1 cm and 100 cm. Notably, the distance between the first or outer entry portion 11a and the first or outer exit portion 11b can also be zero.

The distance between the first or outer entry portion 11a and the assigned one or more left light sources 21a can generally also range between 0,1 mm and 100 cm, particularly between 1 cm and 100 cm. Notably, the distance between the first or outer entry portion 11a and the assigned one or more left light sources 21a can also be zero.

Likewise, the distance between the first or outer exit portion 11b and the assigned one or more right light sources 21b can generally also range between 0,1 mm and 100 cm, particularly between 1 cm and 100 cm. Notably, the distance between the first or outer exit portion 11b and the assigned one or more right sources 21b can also be zero.

Particularly, when the distance between the first or outer entry portion 11a and the first or outer exit portion 11b is comparatively huge, the distance between the first or outer entry portion 11a and the assigned one or more left light sources 21a and/or the distance between the first or outer exit portion 11b and the assigned one or more right light sources 21b is comparatively small, and vice versa. As an example, when the distance between the first or outer entry portion 11a and the first or outer exit portion 11b is in a range between 1 mm and 10 cm, particularly between 1 mm and 1 cm, the distance between the first or outer entry portion 11a and the assigned one or more left light sources 21a and/or the distance between the first or outer exit portion 11b and the assigned one or more right light sources 21b can range between 50 cm and 100 cm, particularly between 60 cm and 100 cm, more particularly between 70 cm and 100 cm, more particularly between 80 cm and 100 cm, more particularly between 90 cm and 100 cm, and vice versa.

As is further apparent from Fig. 1, the respective openings 13a, 13b can be configured, i.e. particularly shaped and/or sized, to at least partly receive a container 30 which defines a volume for receiving a specimen or a photopolymerizable material, particularly a photopolymerizable polymer resin, which is to be irradiated with light for forming a three-dimensional object. In other applications of the light sheet forming arrangement 10, the at least one opening can be configured, i.e. particularly shaped and/or sized, to receive a substrate which defines a surface for receiving a specimen or a photopolymerizable material. Hence, the structural elements 12a, 12b can be generally configured to at least partly receive at least one respective container 30 and/or at least one respective substrate via the respective openings 13a, 13b. Particularly, the respective openings 13a, 13b can be shaped and/or sized such that at least one respective container 30 and/or at least one respective substrate can pass through the respective openings in a direction (see double-arrow P1 in Fig. 1) which is transverse to the main extension plane of the structural elements 12a, 12b. Particularly, the structural elements 12a, 12 can be configured to form the light sheet such that it extends through the respective openings 13a, 13b. More particularly, the structural elements 12a, 12b are configured to form the light sheet such that the light sheet is parallel to the main extension plane of the structural elements 12a, 12b. Hence, the structural elements 12a, 12b can be configured to form the light sheet such that the light sheet extends through the openings 13a, 13b in a direction which is transverse to the direction in which the container 30 and/or at least one respective substrate can pass through the openings 13a, 13b.

The structural elements 12a, 12b can be made from a rigid material, for instance. Particularly, the at least one structural element and plate element, respectively can be made from at least one of: a ceramic, a composite, a metal, a plastic, for instance. Also, the at least one structural element and plate element, respectively can be made from a rigid material structure, particularly based on a ceramic, a polymer or a metal.

Fig. 1 - 4 show that the structural elements 12a, 12b can be in a parallel arrangement, particularly such that their respective main extension planes are arranged in parallel. Hence, the light sheet forming arrangement 10 can comprise at least a first and a second structural element 12a, 12b in a parallel arrangement, particularly such that their respective main extension planes are arranged in parallel. Fig. 1 - 4 further show that respective first and second structural elements 12a, 12b can have the same shape and/or size. Providing the light sheet forming arrangement 10 with two structural elements 12a, 12b in a parallel arrangement, particularly such that their respective main extension planes are arranged in parallel, can improve the light sheet forming capability of the light sheet forming arrangement 10 because the light can be constrained from multiple sides resulting in the formation of at least one highly defined light sheet.

Fig. 1 - 4 show an arrangement of the structural elements 12a, 12b relative to each other such that an intermediate space 14, particularly a slit-like shape intermediate space, is defined between opposing faces of the parallel arranged structural elements 12a, 12b. Providing the light sheet forming arrangement 10 with structural elements 12a, 12b arranged relative to each other such that an intermediate space 14, particularly a slit-like shape intermediate space, is defined between opposing faces of the structural elements 12a, 12b can further improve the light sheet forming capability of the light sheet forming arrangement 10 because the light can pass through the light sheet forming arrangement only through the intermediate space 14 resulting in the formation of at least one highly defined light sheet. As such, the intermediate space 14 can be entered via the respective entry portions 11a, which can be provided at a first lateral side of the light sheet forming arrangement 10, and exited via the respective exit portions 11b, which can be provided at an opposing second lateral side of the light sheet forming arrangement 10, such that a respective light propagation path is defined by the intermediate space 14. The intermediate space 14 can therefore, also be deemed a light sheet forming space which is delimited by opposing faces of the structural elements 12a, 12b.

The intermediate space 14 can have a width of less than 1 mm, particularly less than 0,5 mm, more particularly less than 0,1 mm. The width of the intermediate space 14 is particularly, defined by the distance between the opposing faces of the structural elements 12a, 12b. The width of the intermediate space 14 can be adjusted by changing the relative arrangement of the structural elements 12a, 12b. Adjusting the width of the intermediate space 14 can be effected by adjusting elements (not shown) which enable a change of the position of at least one structural element 12a, 12b to another structural element 12a, 12b. As such, at least one structural element 12a, 12b can be moveable relative to another structural element 12a, 12b so as to change the width and/or shape of the intermediate space 14. Respective adjusting elements can thus, comprise one or more supporting elements which facilitate that at least one structural element 12a, 12b can be moveable relative to another structural element 12a, 12b in at least one degree of freedom of movement which can be a translational degree of freedom of movement (as exemplarily indicated by double-arrow P2 in Fig. 1) and/or a rotational degree of freedom of movement (as exemplarily indicated by double-arrow P3 in Fig. 1). Hence, also the shape of the intermediate space 14 can be adjusted, e.g. by rotating or pivoting one structural element 12a, 12b relative to another structural element 12a, 12b, thereby changing the dimensions of a respective entry portion 11a and/or exit portion 11b, for instance. Adjusting the width and/or shape of the intermediate space 14 can be a means to adjust the properties of the resulting light sheets. Typically, smaller intermediate spaces result in sharper light sheets.

In light of the above, it is apparent that the respective openings 13a, 13b can be arranged along a common axis, particularly such that the openings 13, 13b define a channel-like receiving space 19 for receiving a respective container 30 and/or a respective substrate. Hence, the opening 13a of a first structural element 12a can be arranged relative to the opening 13b of a second structural element 12b such that the respective openings 13, 13b are aligned and build a channel-like receiving space 19 (receiving channel) extending through the light sheet forming arrangement 10 in a direction transverse to the main extension planes of the structural elements 12a, 12b.

As is apparent from Fig. 1 - 4, the light sheet forming arrangement 10 can comprise a spacer element 15 arranged between respective structural elements 12a, 12b, wherein the spacer element 15 comprises a first face facing and contacting a face of a first structural element 12a and a second face facing and contacting a face of the second structural element 12b. Providing one or more respective spacer elements 15 can assure a geometrically defined spatial arrangement of structural elements 12a, 12b and a geometrically defined geometric intermediate space 14, respectively which improves the light sheet forming quality of the light sheet forming arrangement 10. As is apparent from the Fig., a respective spacer element 15 can have a bar-, a film-, or a plate-shape. The wall thickness of a respective spacer element 15 can correspond to the above-mentioned width of the intermediate space 14. The wall thickness of a respective spacer element 15 can thus, be less than 1 mm, particularly less than 0,5 mm, more particularly less than 0,1 mm, for instance.

The spacer element 15 can be made of a transmissive material, e.g. a transmissive polymer or a transmissive glass, or a transmissive material structure such that light of the first wavelength can be transmitted through the at least one spacer element 15. As such, the spacer element 15 does not compromise the light sheet forming properties of the light sheet forming arrangement 10 e.g. due to undesired optical interactions between the light extending through the intermediate space 14 and the spacer element 15. Particularly, the transmissive material or the transmissive material structure can be a light guiding material or a light guiding material structure with respect to light of the first wavelength. Hence, the transmissive material or the transmissive material structure can even support propagation of light through the intermediate space 14.

Even though not shown in the Fig., multiple respective spacer elements 15 can be provided. In an exemplary configuration of the light sheet forming arrangement 10 with multiple spacer elements 15, a first spacer element 15 can be arranged above at least one opening 13a, 13b and at least one second spacer element 15 can be arranged below at least one opening 13a, 13b. Additionally or alternatively, a lateral arrangement of respective spacer elements 15 is conceivable.

The structural elements 12a, 12b can be attached to each other. The structural elements 12a, 12b can thus, comprise one or more attachment interfaces (not shown) which facilitate that the structural elements 12a, 12b can be attached to each other. Respective attachment interfaces can comprise attachment elements which can directly interact with each other such that at least one first attachment interface of a first structural element 12a can directly interact with at least one second attachment interface of a second structural element 12b or vice versa. Examples of respective first and second attachment interfaces are positive-locking elements, such as projections, receptables, etc. which facilitate a positive-locking between the first and second structural elements. Alternatively, respective attachment interfaces can comprise attachment elements which can indirectly interact with each other via at least one attachment member such that at least one first attachment interface of a first structural element 12a can indirectly interact with at least one second attachment interface of a second structural element 12b or vice versa via a respective attachment member. Examples of respective first and second attachment interfaces are bores, openings, etc. which can be penetrated by an attachment bolt which is an example of an attachment member. The aforementioned principles also apply to non-mechanical attachments principles of respective structural elements 12, 12b, such as adhesive attachment principles, hydraulic attachment principles, magnetic attachment principles, for instance. An attachment of the structural elements 12a, 12b can thus, comprise an adhesive attachment, a mechanical attachment, a hydraulic attachment, a magnetic attachment, etc. It is apparent that the attachment of the structural elements 12a, 12b can be detachable which can ease installation, service, and repair, for instance.

As indicated further above, the structural elements 12a, 12b can be moveably supported relative to each other. A movement of the structural elements 12a, 12b relative to each other can be particularly, useful for adjusting the intermediate space 14 between the structural elements 12a, 12b. The light sheet forming arrangement 10 can comprise one or more guiding elements (not shown) which facilitate a guided motion of at least one structural element 12a, 12b relative to another element 12a, 12b. Respective guiding elements can define translatory and/or rotary motion paths along and/or about which respective structural elements 12a, 12b can be moved relative to each other. Respective guiding elements can comprise one or more rails, slides, etc. Further, the light sheet forming arrangement 10 can comprise one or more drive devices (not shown) configured to generate a force to move at least one structural element 12a, 12b relative to another structural element 12a, 12b. A respective drive device can comprise a motor, particularly a stepper motor, for instance.

Finally, the at least one of the structural elements 12a, 12b can at least partially comprise reflective properties with respect to the light of the first wavelength as emitted from the first irradiation device 20. Particularly, at least one structural element 12a, 12b can comprise a face which at least partially comprises reflective properties with respect to light of the first wavelength as emitted from the first irradiation device 20. Hence, at least one structural element 12a, 12b can be provided with optically reflective properties which support the formation of a defined light sheet, e.g. due to reflective effects which enable forming a (substantially) parallel arrangement of light beams in one common light plane. Particularly, the reflective properties of the at least one structural element 12a, 12b can be provided at wall portions of the at least one structural element 12a, 12b which define or delimit the volume 11. Respective reflective properties can be provided by a coating, e.g. a plastic or metallic coating, having reflective properties with respect to the first wavelength as emitted from the first irradiation device 20, for instance.

Additionally or alternatively, at least one structural element 12a, 12b can at least partially comprise absorptive properties with respect to the light of the first wavelength as emitted from the first irradiation device 20. Particularly, the at least one structural element 12a, 12b can comprise a face which at least partially comprises absorptive properties with respect to light of the first wavelength as emitted from the first irradiation device 20. Hence, the at least one structural element 12a, 12b can be provided with optically absorptive properties which support the formation of a defined light sheet, e.g. due to absorptive effects which enable forming a (substantially) parallel arrangement of light beams in one common light plane. Particularly, the absorptive properties of the at least one structural element 12a, 12b can be provided at wall portions of the at least one structural element 12a, 12b which define or delimit the volume 11. Respective absorptive properties can be provided by a coating, e.g. a plastic or metallic coating, having absorptive properties with respect to the first wavelength as emitted from the first irradiation device 20, for instance.

As indicated above, the light sheet forming arrangement 10 can be assigned to or form part of a volumetric 3d-printing device 40 configured to form a three-dimensional object.

The volumetric 3d-printing device 40 comprises the container 30 which defines a volume configured to receive a photopolymerizable material, particularly a photopolymerizable polymer resin, which is to be irradiated with light for forming a three-dimensional object; and a light sheet forming arrangement 10.

The volumetric 3d-printing device 40 is generally configured to form a three-dimensional object via volumetric 3d-printing. A respective three-dimensional object can be a technical component or a technical component assembly, for instance. A respective volumetric 3d-printing process can comprise at least one local polymerization process of a polymerizable material, particularly a photopolymerizable material, for the continuous additive manufacture of at least one three-dimensional object, particularly multiple three-dimensional objects, by means of multiphoton photopolymerization, particularly multi-color photopolymerization, more particularly dual-color photopolymerization. The volumetric 3d-printing device 40 can thus be configured to perform one or more local polymerization processes of a polymerizable material, e.g., a photopolymerizable monomer resin, which polymerizable material may include but is not limited to acrylates, methacrylates, thiol + ene, epoxides, oxiranes, oxetanes, or vinylethers, and/or a photopolymerizable oligomer resin, which may include but are not limited to acrylates, methacrylates, thiol + ene, epoxides, oxiranes, oxetanes, or vinylethers, for the continuous additive manufacture of at least one three-dimensional object by means of multiphoton photopolymerization, particularly multi-color photopolymerization, more particularly dual-color photopolymerization. As such, the volumetric 3d-printing device can be configured to continuously additively manufacture at least one three-dimensional object by means of multiphoton photopolymerization, particularly multi-color photopolymerization, more particularly dual-color photopolymerization, of a photopolymerizable material, particularly a photopolymerizable polymer, e.g., a photopolymerizable polymer resin.

Respective local polymerization processes which can be carried out with the volumetric 3d-printing device 40, typically, comprise irradiating a photoinitiator with light of at least one wavelength to convert the molecules of the photoinitiator via sequential optical excitation into a reactive state in which the molecules of the photoinitiator locally trigger a polymerization reaction of a polymerizable material in a working volume of the volumetric 3d-printing device. Photopolymerization of the polymerizable material is thus typically, effected inside a working volume of the volumetric 3d-printing device 40, e.g. by irradiating light of at least one first wavelength and light of at least one further wavelength, which further wavelength is different from the first wavelength, via one or more irradiation devices 20, 41 of the volumetric 3d-printing device 40 into the working volume, which results in that the molecules of the photoinitiator are converted, e.g., due to the absorption of light of the first wavelength, from an initial state in which the molecules of the photoinitiator (substantially) do not absorb the light of the second or further wavelength, into an intermediate state with changed optical properties compared to the initial state, such that the molecules of the photoinitiator in the intermediate state absorb the light of the further wavelength which results in that the molecules of the photoinitiator are transferred from the intermediate state to the reactive state which locally triggers the polymerization of the photopolymerizable material to manufacture at least one three-dimensional object inside the working volume of the volumetric 3d-printing device 40. A back reaction from the intermediate state into the initial state can be thermally induced, for instance.

The volumetric 3d-printing device 40 can thus generally be embodied as a xolography device, i. e. a device configured to perform the base principles of xolography. The base principles of xolography are specified in WO 2020/245456 A1, the contents of which are incorporated herein by reference.

As indicated above, the volumetric 3d-printing device 40 comprises a working volume configured to receive a photopolymerizable material, particularly a photopolymerizable polymer resin, which is to be irradiated with light of at least one wavelength, particularly with light of at least two different wavelengths, for forming a three-dimensional object. The working volume of the volumetric 3d-printing device 40 is a local sub-volume of a container volume of the container 30. The container 30 can be moveably supported relative to the structural elements 12a, 12b in a direction transverse to the main extension planes of the structural elements 12a, 12b as indicated further above.

The container volume can be delimited by one or more container walls of the container 30. The one or more container walls can be transparent with respect to light of a first wavelength and/or light of a further wavelength (as specified above). Respective transparent container walls can be provided as walls of glass, or walls of translucent polymers, such as PC (polycarbonate), PMMA (polymethylmethacrylate), or COC (cyclic olefin copolymer), for instance. At least some of the container walls can, at least to some degree, exhibit diffractive and/or refractive effects to incident light of at least the first wavelength.

As indicated above, the photopolymerizable material can comprise photoinitiator molecules that can be converted, particularly via an intermediate state, into a reactive state by means of radiation with light of at least one wavelength, wherein the photoinitiator molecules initiate local polymerization of the polymerizable material into the reactive state. As a non-limiting example, respective photoinitiator molecules can comprise spiropyran molecules, i. e. molecules of the spiropyran/merocyanine system in which the spiropyran form is the thermodynamically preferred form and undergoes a ring-opening reaction upon irradiation with light of a first wavelength which results in that the spiropyran form is transferred in the metastable merocyanine form which can be transferred, particularly by absorption of light of a further wavelength, into the reactive state.

As indicated further above, the volumetric 3d-printing device 40 comprises a first irradiation device 20 comprising at least one light source 21a, 21b configured to irradiate light of a first wavelength into the working volume to generate at least one first light projection in the working volume. Notably, the first irradiation device 20 can be the first irradiation device 20 of the light sheet forming arrangement 10. The at least one first light projection can thus, comprise multiple light beams traversing the working volume in a light sheet formed by the light sheet forming arrangement 10. As indicated above, the light as emitted or irradiated by the first irradiation device 20 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. Typically, the first wavelength will be chosen at least under consideration of the photochemical properties, particularly the photochromic properties, of molecules of the photoinitiator.

The volumetric 3d-printing device 40 can additionally comprise at least one further irradiation device 41 configured to continuously project a plurality of images of light of a further wavelength, the further wavelength being different from the first wavelength, into the working volume (see Fig. 1 and Fig. 4). Each image of the further wavelength can correspond to a specific portion, particularly a specific cross-section, of the at least one three-dimensional object to be manufactured with the volumetric 3d-printing device 40. The further irradiation device 41 can thus be built as or comprise an image projector. The light as emitted or irradiated by the further irradiation device 41 can comprise a wavelength in the range of: 400 nm - 1000 nm, particularly 425 - 750 nm, more particularly 450 - 675 nm, more particularly 500 - 650 nm, for instance. The light of the further wavelength can comprise a spectrum of wavelengths, particularly at least partly covering the respective ranges. Typically, the further wavelength will be chosen at least under consideration of the photochemical properties, particularly the photochromic properties, of molecules of the photoinitiator.

Particularly, the further irradiation device 41 can be configured to irradiate the light of the further wavelength into the working volume to generate a second light projection in the working volume, the second light projection intersecting the first light projection, which his formed by the light sheet of the light of the first wavelength, at a specific angle, particularly an angle of 90°. Hence, the light plane generated by the light sheet forming arrangement 10 can be oriented at an angle, particularly at an angle of 90°, relative to the direction of projection of the plurality of images generated by the further irradiation device 41. The local polymerization process of the photopolymerizable material and, thus the formation of a three-dimensional object can therefore, occur in the region in which the projected images generated by the further irradiation device 41 intersect the light sheet generated by the light sheet forming arrangement 10. As indicated above, the local polymerization process of the photopolymerizable material and, thus the formation of a three-dimensional object can take place continuously (which is one characteristic of volumetric 3d-printing relative to conventional additive manufacturing principles).

Typically, the projection of the plurality of images generated by the further irradiation device 41 does not only overlay the light sheet generated by the light sheet forming arrangement 10 but also has its focus plane in the light sheet. Notably, dynamic or static optical properties of the photopolymerizable material, such as the refractive index, can be considered for adjusting the focus plane of the projection of the plurality of images generated by the further irradiation device 41.

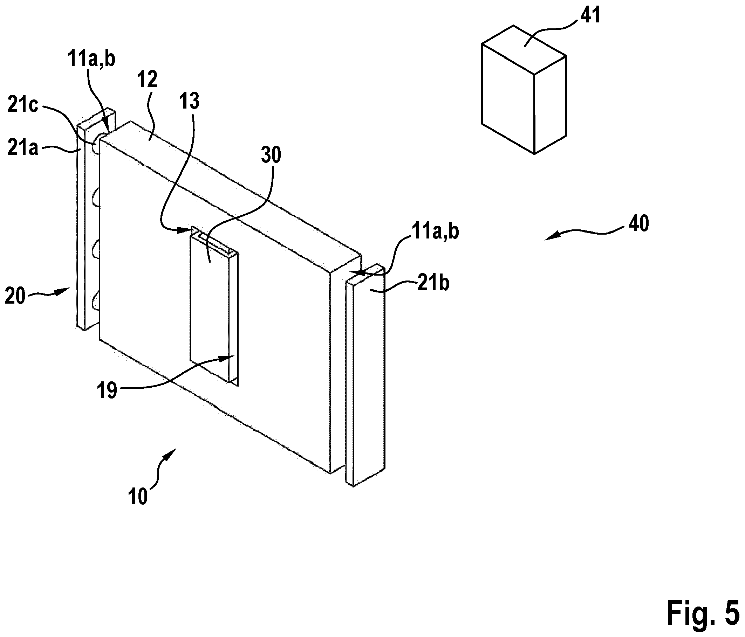

Fig. 5 shows a principle drawing of a light sheet forming arrangement 10 according to another exemplary embodiment in a perspective view. The main difference between the first exemplary embodiment of Fig. 1 - 4 and the exemplary embodiment of Fig. 5 is that the light sheet forming arrangement 10 of Fig. 5 comprises only one structural element 12 having an opening 13 for the container 30.

Hence, the volume 11 is not defined by a (free) volume between two structural elements 12a, 12b but by the volume of the structural element 12 itself. The structural element 12 of the embodiment of Fig. 5 can thus, be built as a light guiding element.

The structural element 12 can thus, be made from or comprise a material or a material structure having light guiding properties. A respective material or material structure can be or comprise a plastic, such as e.g. polycarbonate, polymethylmethacrylate, cyclic olefin copolymer, etc., having light guiding properties or glass.

The structural element 12 can also comprise an entry portion 11a and an exit portion 11b. The entry portion 11a and the exit portion 11b of the structural element 12 can have a rectangular cross-sectional shape, for instance. The entry portion 11a and the exit portion 11b can be arranged at opposing ends, particularly at opposing lateral ends, of the structural element 12, for instance. As such, the structural element 12 can comprise a light propagation path which extends between the entry portion 11a and the exit portion 11b. The light propagation path can particularly, facilitate linear light propagation of light emitted from the first irradiation device 20 through the structural element 12 in a specific direction which can result in the formation of a light sheet. Hence, a light sheet can be formed through the fact that light enters and/or exits the structural element 11 via the entry portions 11a and exit portions 11b, respectively.

Respective openings 13a, 13b of the one or more structural elements 12, 12a, 12b of the embodiments can also be configured to receive a substrate which defines a surface for receiving a specimen or a photopolymerizable material. The 3d-volumetric printing device 40 can thus, also be configured to form a three-dimensional object on a surface of a respective substrate. A respective substrate can be a plate, e.g. a micro-plate or multiwell-plate, for instance.

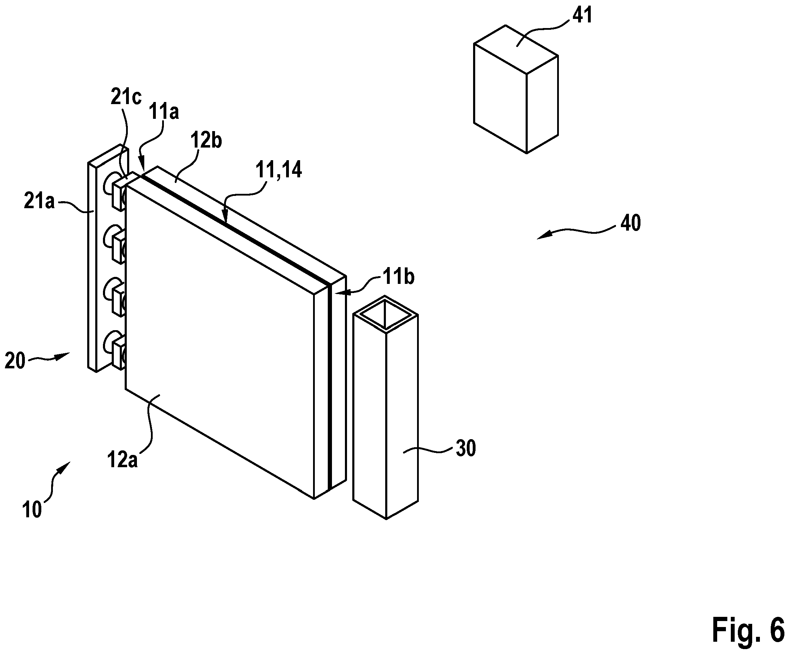

Fig. 6 shows a principle drawing of a light sheet forming arrangement 10 according to another exemplary embodiment in a perspective view. The main difference between the first exemplary embodiment of Fig. 1 - 4 and the exemplary embodiment of Fig. 6 is that the light sheet forming arrangement 10 of Fig. 6 comprises one or more structural elements 12 having no opening 13 for the container 30. Notably, the container 30 is arranged (laterally) adjacent to the outer exit portion 11b of the light sheet forming arrangement 10. Preferably, the container 30 is arranged close to the outer exit portion 11b of the light sheet forming arrangement 10; particularly, the distance between the outer exit portion 11b and the container 30 can range between 0 cm and 40 cm, particularly between 0,1 cm and 10 cm, more particularly between 0,1 cm and 5 cm, more particularly between 0,1 cm and 3 cm, more particularly between 0,1 cm and 2 cm, more particularly between 0,1 cm and 1 cm.

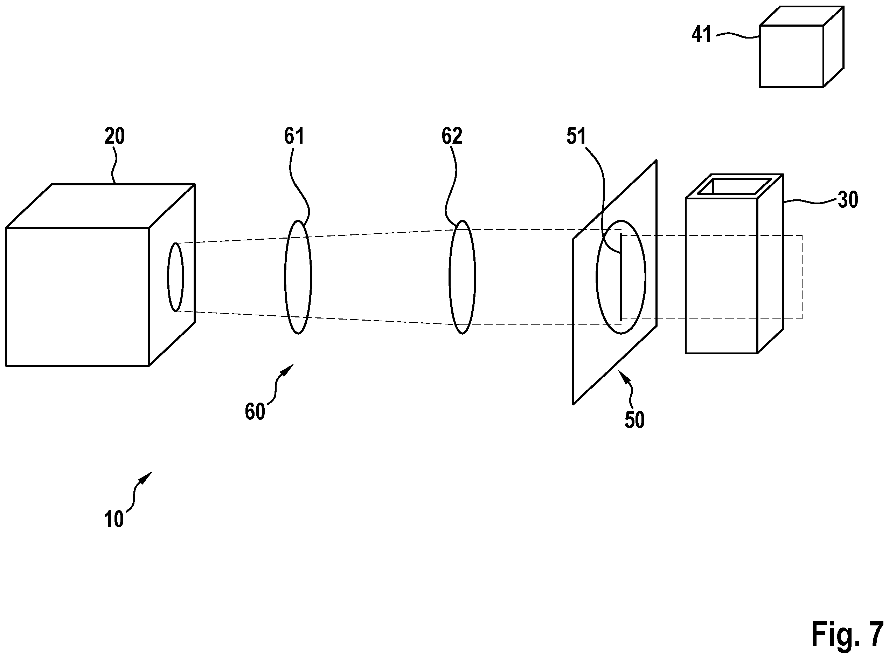

Fig. 7 shows a principle drawing of a light sheet forming arrangement 10 according to another exemplary embodiment in a perspective view. In the exemplary embodiment of Fig. 7, the light sheet forming arrangement 10 comprises a structural element in the shape of an aperture device 50. The aperture device 50 comprises at least one, particularly slit-like, aperture opening 51. Particularly, the aperture opening 51 is vertically oriented. The aperture device 50 generally has a plate-like shape which comprise the at least one, particularly slit-like, aperture opening 51 in the vertical orientation. The main extension plane of the aperture device 50 is arranged angled, particularly perpendicular, relative to the extension plane of the at least one light sheet to be formed with the light sheet forming arrangement 10.

Fig. 7 also exemplarily shows that one or more optical elements 60, such as e.g. beam expanding elements 61, e.g. beam expanding lenses, collimating elements 62, e.g. collimating lenses, can be arranged between the first irradiation device 20 and the aperture device 50 and the at least one structural element in general. The provision of respective optical elements 60 between the first irradiation device 20 and the at least one structural element 12 can also be applied in all other embodiments and can improve the quality of the at least one light sheet to be formed with the light sheet forming arrangement 10. Concrete examples of respective optical elements comprise lenses, e.g. double-concave lenses, planoconcave lenses, double-convex lenses, planoconvex lenses, etc.

Fig. 8 shows a principle drawing of a light sheet forming arrangement 10 according to another exemplary embodiment in a partially exploded perspective view. In the example of Fig. 8, two structural elements 12a, 12b in the shape of plate elements each having a disc-like base shape are shown in a coaxial stacked arrangement. Particularly, the plate elements have the shape of a ring or a ring-disc, respectively. In the example, the container 30 has a cylindrical or hollow cylindrical shape such that it can be received within the coaxially arranged inner spaces of the plate elements. As such, the inner spaces of the plate elements form a respective opening 13 and channel-like receiving space 19.respectively.

Notably, Fig. 8 also shows that the first irradiation device 20 can comprise a ring-shape at least partially, possibly completely, surrounding the outer circumference of the plate elements. Particularly, the light sources 21a, 21b are arranged so as to surround the outer circumference of the plate elements which results in the formation of a light sheet LS of highly homogenous properties.

Similar considerations as provided in connection with the embodiment of Fig. 8 would also apply for structural elements 12a, 12b having a polygonal base shape, such as e.g. a hexagonal base shape or an octagonal base shape. In such exemplary embodiments, the light sources 21a, 21b could be arranged in a corresponding polygonal arrangement, such as e.g. a hexagonal arrangement or an octagonal arrangement, to surround the outer circumference of the structural elements 12a, 12b accordingly.

## Claims

1. A light sheet forming arrangement, particularly for a volumetric 3d-printing device or for a light sheet microscopy device or for a volumetric display device, the light sheet forming arrangement comprising:
- at least one first irradiation device configured to emit, particularly divergent, light of a first wavelength into a volume defined by at least one structural element of the light sheet forming arrangement; and
- at least one structural element assigned to the at least one first irradiation device which defines the volume, wherein the at least one structural element is configured to generate at least one light sheet from the light of the first wavelength which has been emitted into the volume by the at least one first irradiation device.

2. The light sheet forming arrangement of claim 1, wherein the at least one structural element comprises or defines an entry portion and an exit portion, wherein the at least one structural element is configured such that it forms a light sheet from light, particularly divergent light, which light sheet exits via the exit portion.

3. The light sheet forming arrangement of any one of the preceding claims, wherein the at least one structural element comprises a main plane, wherein the main plane is arranged parallel to the at least one light sheet.

4. The light sheet forming arrangement of any one of the preceding claims, wherein the at least one structural element comprises a plate element, wherein the at least one plate element preferably comprises at least one opening for at least partly receiving a container which defines a volume for receiving a specimen or a photopolymerizable material, particularly a photopolymerizable polymer resin, which is to be irradiated with light for forming a three-dimensional object and/or a substrate which defines a surface for receiving a specimen or a photopolymerizable material; wherein the at least one plate element is configured to form the at least one light sheet such that it extends through the at least one opening.

5. The light sheet forming arrangement of any one of the preceding claims, comprising at least a first and a second structural element, particularly in a parallel arrangement, more particularly such that their respective main planes are arranged in parallel, wherein the at least one first and second structural element are preferably arranged relative to each other such that an intermediate space is defined between opposing faces of the at least one first and second structural elements, wherein the intermediate space preferably has a width of less than 1 mm, particularly less than 0,5 mm, more particularly less than 0,1 mm.

6. The light sheet forming arrangement of any one of the preceding claims, wherein the first and second structural elements are plate elements each comprising at least one opening for at least partly receiving a container which defines a volume for receiving a specimen or a photopolymerizable material, particularly a photopolymerizable polymer resin, which is to be irradiated with light for forming a three-dimensional object and/or a substrate which defines a surface for receiving a specimen or a photopolymerizable material, wherein the first plate element and the second plate element are arranged such that their respective openings are arranged along a common axis, particularly such that their respective openings define a channel-like receiving space for receiving a container which defines a volume for receiving a specimen or a photopolymerizable material, particularly a photopolymerizable polymer resin, which is to be irradiated with light for forming a three-dimensional object and/or a substrate which defines a surface for receiving a specimen or a photopolymerizable material.

7. The light sheet forming arrangement of any one the preceding claims, further comprising at least one spacer element arranged between the at least one first and second structural element, wherein the at least one spacer element comprises a first face facing and contacting a face of the first structural element and a second face facing and contacting a face of the second structural element, wherein the at least one spacer element is preferably made of a transmissive material, e.g. a transmissive polymer or a transmissive glass, or a transmissive material structure such that light of the first wavelength can be transmitted through the at least one spacer element.

8. The light sheet forming arrangement of any one of the preceding claims, wherein the at least one structural element at least partially comprises reflective properties with respect to the first wavelength, particularly the at least one structural element comprises a face which at least partially comprises reflective properties with respect to light of the first wavelength; and/or wherein the at least one structural element at least partially comprises absorptive properties with respect to the first wavelength, particularly the at least one structural element comprises a face which at least partially comprises absorptive properties with respect to light of the first wavelength.

9. The light sheet forming arrangement of any one of the preceding claims, wherein the at least one structural element is made from a light-guiding material, such as e.g. a light-guiding polymer or glass.

10. The light sheet forming arrangement of any one of the preceding claims, wherein the at least one first irradiation device comprises at least one light emitting element, particularly at least one light emitting diode, arranged at a lateral side of the at least one plate element; wherein the at least one first irradiation device preferably comprises at least one first light emitting element, particularly at least one first light emitting diode, arranged at a first lateral side of the at least one structural element and at least one second light emitting element, particularly at least one second light emitting diode, arranged at a second lateral side of the at least one plate element.

11. The light sheet forming arrangement of any one of the preceding claims, wherein the at least one first irradiation device comprises at least one light emitting element, particularly at least one light emitting diode, and at least one optical lens element, particularly a collimating lens element, assigned to the at least one light emitting element, particularly the at least one light emitting diode.

12. The light sheet forming arrangement of any one of the preceding claims, wherein the at least one structural element comprises an aperture device comprising at least one, particularly slit-like, aperture opening.

13. The light sheet forming arrangement of any one of the preceding claims, wherein the at least one structural element has a ring- or ring-like base shape, optionally wherein multiple structural elements each having a ring- or ring-like base shape are provided in a coaxial stacked arrangement.

14. A device for volumetric 3d-printing to form a three-dimensional object, the device comprising:
a container defining a volume configured to receive a photopolymerizable material, particularly a photopolymerizable polymer resin, which is to be irradiated with light for forming a three-dimensional object; and
a light sheet forming arrangement of any one of the preceding claims; wherein the container and/or substrate is preferably moveably supported relative to the at least one plate element, particularly in a direction transverse to a main plane of the at least one plate element.

15. A light sheet microscopy device, the device comprising:
a volume, particularly a container, for receiving a specimen; and
a light sheet forming arrangement of any one of claims 1-13.

16. A volumetric display device, the device comprising:
a light sheet forming arrangement of any one of claims 1-13.
